# EUROPEAN PATENT APPLICATION

(11) **EP 1 156 641 A2**
(43) Date of publication of application: **21.11.2001**
(21) Application number: 01112133.2
(22) Date of filing: 17.05.2001
(51) Int. Cl.: H04M 1/02, H04M 1/22

(54) **Cellular phone set**

(30) Priority: 17.05.2000 IT TN000010
(71) Applicant: Comincini, Alfredo, 38070 Ragoli (Trento) (IT); Viviani, Aldo, 38100 Tione (Trento) (IT)
(72) Inventor: Comincini, Alfredo, 38070 Ragoli (Trento) (IT); Viviani, Aldo, 38100 Tione (Trento) (IT)
(74) Representative: Cicogna, Franco

(57) **Abstract**

A portable cellular phone set comprises a preferably rechargeable battery, and being characterized in that at a region of the phone body or battery body at least an electrical lamp is provided which is electrically coupled to the battery, through an operating switch.

## Description

### BACKGROUND OF THE INVENTION

The present invention relates to a portable or cellular phone set including a power supply battery and a lighting lamp, according to claim 1.

As is known, the so-called "cellular" phones, are portable phone sets, which are broadly diffused and used by a vast plurality of users for communicating with one another.

The possibility of using a lighting source, for dark or night conditions, is useful for persons searching a keyhole, an article, a path to be followed, or who desire to read information on paper and the like materials, and do not desire to bring in their pockets large size objects, such as electric sticks and the like.

### SUMMARY OF THE INVENTION

In order to solve the above mentioned problem, the aim of the present invention is that of providing a lighting source, to be applied to a cellular phone set, without increasing the size of said cellular phone set.

The above mentioned aim, as well as yet other objects, which will become more apparent hereinafter, are achieved by a portable or cellular phone set, including a battery and an electric lamp, having the features of the characterizing part of claim 1.

By exploiting the electric power of the battery, either of a rechargeable type or not, which is conventionally applied to the frame or body of the portable phone set, it is possible to have always available a lighting source, since the latter is applied to a cellular phone set, which, as stated, is a broadly diffused article.

The electric lamp or light source can project from the cellular body and/or the battery body, as applied to the portable phone set, or said lamp or light source can be mounted with a 'push or recessed relationship with respect to said cellular phone body.

In order to quickly and easily switch on/off said lighting source, a switch element has been provided, which is applied at a position which can be easily accessed by a finger of the user hand, for example said switch being applied on the phone set side wall, at a left position for a person using a right hand or at a right position for a person using a left hand.

The switch can be push-button switch, in a case in which the user could be provided with the possibility of choosing the use time of the light source, or said switch can be of an ON-OFF type, or it can also be of a so-called "touch" type, or of a timer controlled type.

In order to allow a user to easily read a document, during a phone communication, and according to a further embodiment of the invention, the electric lamp or light source can also be arranged on the bottom wall of the cellular phone, in its intended position of use.

Also in this case the switch can be applied at an easily accessible position for facilitating the operation of the switch by the user finger.

### BRIEF DESCRIPTION OF THE DRAWINGS

Further characteristics and constructional details of the cellular or portable phone set according to the present invention will become more apparent hereinafter from the following detailed disclosure of a preferred, though not exclusive, embodiment' of the invention, which is illustrated in the figures of the accompanying drawings, where:

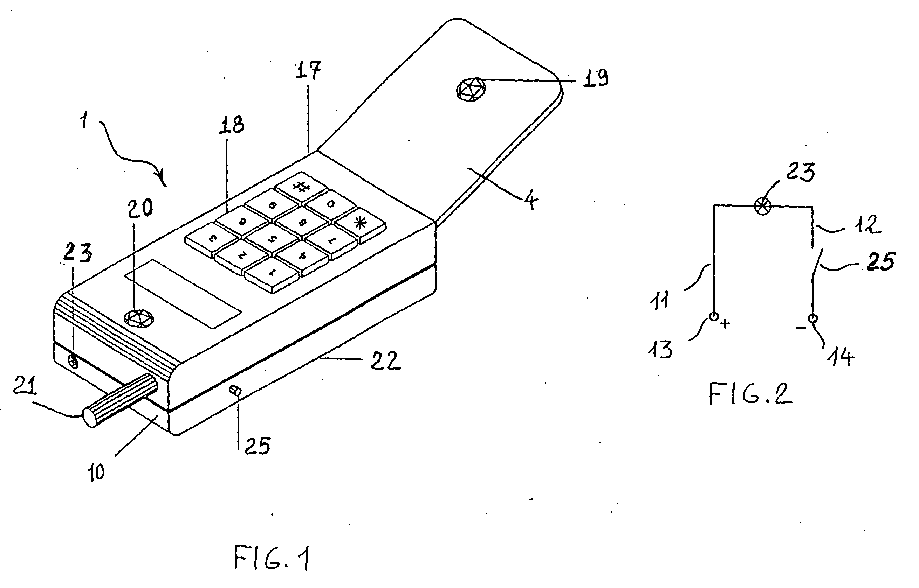

Figure 1 is a schematic isometric view which schematically illustrates a first embodiment of a cellular phone set according to the present invention;
Figure 2 illustrates an electric diagram of a circuit for power-supplying an electric lamp applied to a portable or cellular phone set or to the battery of the latter;
Figure 3 is a schematic isometric view illustrating a second embodiment of a cellular phone set according to the present invention;
Figure 4 is a perspective front side view illustrating a portable phone set, of a cellular type;

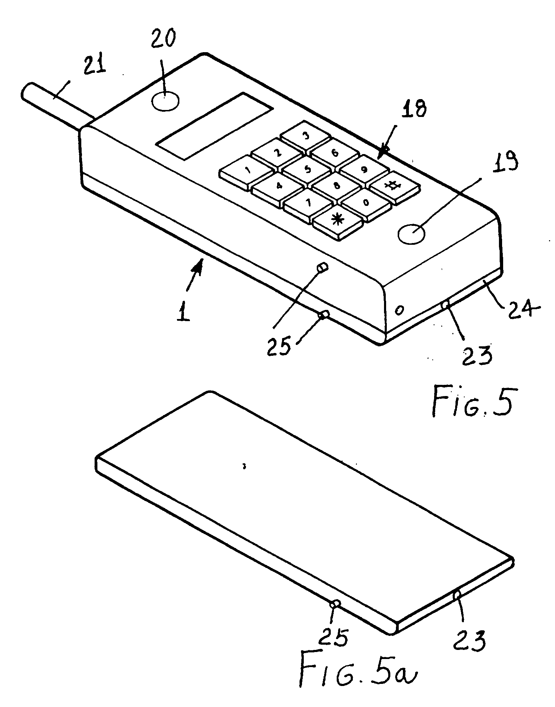

Figure 5 is a further perspective view illustrating the bottom side portion of the cellular phone set;
Figure 5a is a further perspective view illustrating the battery applied to a cellular or cordless phone set, said battery including a switch and an electric lamp allowing articles to be illuminated;

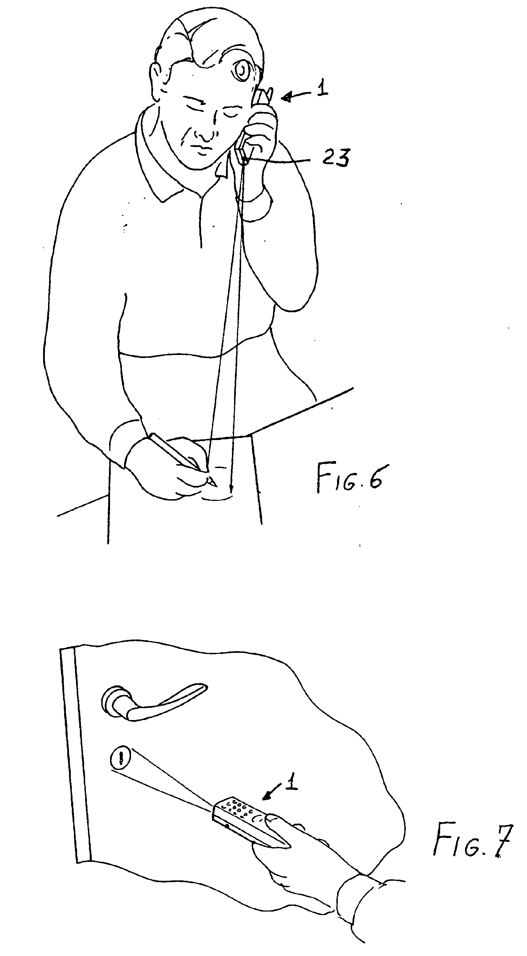

Figure 6 is a front view illustrating a user using a cellular or cordless phone set, including a lamp provided for downward projecting, on a document or other article, a light beam; and
Figure 7 is a further perspective view illustrating a mode of use of a cellular or cordless phone set, in which a light beam is projected toward a lock assembly.

### DESCRIPTION OF THE PREFERRED EMBODIMENTS

With reference to the number references of the accompanying drawings, the cellular or portable phone set according to the present invention, is generally indicated by the reference number 1, and comprises, in a per se known manner, a support element 17, a keyboard assembly 18, arranged on a face of the support element 17, a cover 4 pivoted to the bottom edge of said support element 17, a microphone 19, an earphone 20 and an antenna 21.

The phone set 1 is power supplied by a rechargeable power supply battery 22, which is coupled, in a per se known manner, to said support element 17.

According to the invention, in said support element 17 and/or in the body 22 of said battery, an electric lamp 23 is recessed.

Said electric lamp, in particular, is applied to the top wall 10 of the body 22 of said battery, at a use position of the phone set 1.

As shown, said electric lamp 23 is power supplied with electric current through power supply lines 11 and 12 which are respectively coupled to the positive pole 13 and negative pole or post 14 of said battery 22.

In one of said electric lines 11 and 12, is arranged a switch 25, which projects from one of the side walls of the battery body 22.

In this connection it should be apparent that said switch 25 can also be applied on a side of the phone set 1, at a position facilitating the gripping of said phone set by a user for performing a phone communication.

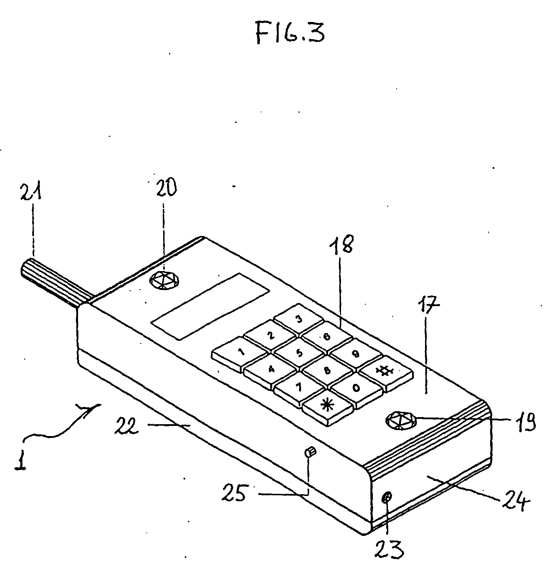

Figure 3 shows moreover a phone set 1 including a support element 17 comprising a keyboard assembly 18, a microphone 19, an earphone 20 and an antenna 21, to which a rechargeable power supply battery 22 is coupled.

According to the invention, said power supply battery 22 is electrically coupled, as already shown with reference to the first embodiment of the invention, to an electric lamp 23, applied to the bottom wall 24 of the body 17 of the phone set 1.

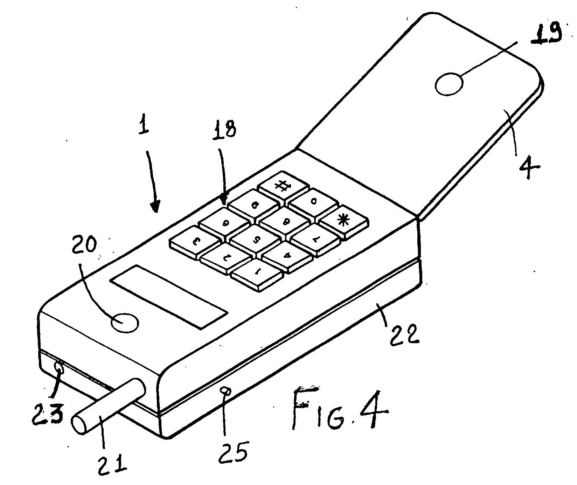

Figure 4 shows a battery 22 including a built-in switch 25 for operating the electric lamp 23.

The circuit including said power supply battery, the connections thereof and the electric lamp can be opened or closed through a switch 25 applied to one of the side walls of the power supply battery 22.

While in the disclosure of the positions of said electric lamp and switch reference has been made to a set wall of the battery body, it should be apparent that the electric lamp and the switch can be arranged at any desired suitable positions.

Indeed, it should be moreover apparent that more electric lamps, directly power supplied from said battery could also be provided, included in a single circuit or in different individual circuits, by using or more switches.

Furthermore, the electric lamp and related switch according to the present invention, could also be applied, in addition to the power supply battery of the cellular set, also to other types of portable phone sets, such as cordless sets.

The cellular phone set power supply battery, including the disclosed electric lamp, can be sold as a replacement part or a fitting part, thereby all the commercially available phone cellular set could be provided with suitable lighting or illuminating sources.

Said electric lamps 23 can also be applied at the bottom side or portion of the battery or portable phone set, allowing the phone set user to easily grip, by a hand, said phone set, while allowing said user to write, by his/her other hand, on a paper sheet which will be thereby properly illuminated.

It should be moreover pointed out that the portable phone set and/or battery could also be provided with a manually operated switch or a timer controlled switch, operating the lighting source.

## Claims

1. A portable or cellular phone set, comprising a preferably rechargeable power supply battery, said phone set having a phone set body, **characterized in that** at a region of said phone set body or of a battery body, at least an electric lamp (23) is provided, said electric lamp being electrically coupled to said battery (22) through a switch (25).

2. A portable or cellular phone set according to Claim 1, **characterized in that** said electric lamp (23) is arranged on a top wall of the body (17) of the phone set (1) or of the battery (22) at a use position of said phone set (1).

3. A portable or cellular phone set according to Claim 1, **characterized in that** said switch (25) is applied to the side wall of the body (17) of the phone set (1) or of the battery (22), at a left position, in a use condition of said phone set, for a right handed user or at a right position for a left handed user.

4. A portable or cellular phone set according to Claim 1, **characterized in that** said electric lamp (23) is arranged on the bottom wall (24) of the battery body (22) or of the phone set body (17), at a use position of said phone set.

5. A portable or cellular phone set according to one or more or the preceding claims, **characterized in that** said phone set is either a cellular phone set or a cordless phone set.

6. A portable or cellular phone set according to one or more or the preceding claims, **characterized in that** said electric lamp is coupled to an electric circuit including either a manually operated switch or a timer controlled switch.
